# EUROPEAN PATENT SPECIFICATION

(11) **EP 3 628 577 B1**
(45) Date of publication and mention of the grant of the patent: **26.05.2021**
(21) Application number: 19199100.9
(22) Date of filing: 24.09.2019
(51) Int. Cl.: B62J 17/04

(54) **SADDLED VEHICLE**
SATTELFAHRZEUG
VÉHICULE À ENFOURCHER

(30) Priority: 27.09.2018 JP 2018183022
(43) Date of publication of application: 01.04.2020
(73) Proprietor: Honda Motor Co., Ltd., Tokyo 107-8556 (JP)
(72) Inventor: Hosoya, Takumi, Saitama, 351-0193 (JP)
(74) Representative: Beder, Jens

(56) References cited:
- EP-A2- 1 908 676
- EP-A2- 2 505 468
- JP-A- 2012 091 705
- JP-A- 2017 065 667

## Description

### BACKGROUND

### 1. Technical Field

The present invention relates to a saddled vehicle, particularly to a saddled vehicle which includes a windscreen disposed above a handle cover that covers the center in the vehicle width direction of a steering handle.

### 2. Description of the Background

A conventionally known saddled vehicle including a handle cover supporting an instrument panel or a lighting device at the center in the vehicle width direction of a steering handle has a windscreen disposed above the handle cover.

JP 6 295 291 B2 discloses a saddled vehicle having the lower end of a right and left pair of screen stays supporting the windscreen passed through openings at the handle cover so as to be fixed to the steering handle.

EP 1 908 676 A2 discloses a saddled vehicle with the features from appended claim 1's preamble.

### BRIEF SUMMARY

In JP 6 295 291 B2, in an attempt to improve the appearance of the screen stays formed of round pipe members, the screen stays are covered with a resin cover formed of right and left components. This disadvantageously increases the number of components and assembly steps.

An object of the present invention is to solve the conventional problem, and to provide a saddled vehicle which includes a screen stay with improved appearance, in smaller number of components and assembly steps.

In order to achieve the object, according to the invention, it is provided a saddled vehicle (1) including: a steering handle (2) including a grip (43) at each of its right and left ends; a handle cover (3) covering a center in a vehicle width direction of the steering handle (2); a windscreen (4) disposed above the handle cover (3); and a screen stay (60) supporting the windscreen (4) and removably mounted on the steering handle (2). The screen stay (60) is an integral-molded element. The handle cover (3) includes a notch (80) for allowing a mount part (65) provided at a bottom end of the screen stay (60) to pass through. The screen stay (60) includes a flange part (64) covering the notch (80).

According to the invention, when the screen stay (60) is mounted on the steering handle (2), the flange part (64) forms a surface continuous to the handle cover (3) and exposed at an upper part of the saddled vehicle (1).

According to the invention, the handle cover (3) is formed of a front-side cover (53) on a front side and a rear-side cover (54) on a rear side. The notch (80) is formed at the front-side cover (53). The flange part (64) extends rearward to be brought into contact with the rear-side cover (54).

In a second aspect of the present invention, the screen stay (60) is mounted from the front side on the steering handle (2).

In a third aspect of the present invention, the mount part (65) of the screen stay (60) is a plate-like member provided with through holes (65a, 65b).

In a fourth aspect of the present invention, the through holes (65a, 65b) are provided by two in number and vertically aligned with each other. To the steering handle (2), a mount stay (73) including bolts (72) to pass through the through holes (65a, 65b) is fixed.

A fifth aspect of the present invention further includes a top cover (46) covering an upper surface of the front-side cover (53). The upper surface of the front-side cover (53) is inclined rear-upward. The top cover (46) is provided with a bulging part (46a) covering an upper part of the notch (80) in front of the flange part (64).

In an sixth aspect of the present invention, the saddled vehicle (1) is a scooter-type motorcycle including a step floor (38) for a driver to rest his/her feet.

According to the first aspect, a saddled vehicle (1) includes: a steering handle (2) including a grip (43) at each of its right and left ends; a handle cover (3) covering a center in a vehicle width direction of the steering handle (2); a windscreen (4) disposed above the handle cover (3); and a screen stay (60) supporting the windscreen (4) and removably mounted on the steering handle (2). The screen stay (60) is an integral-molded element. The handle cover (3) includes a notch (80) for allowing a mount part (65) provided at a bottom end of the screen stay (60) to pass through. The screen stay (60) includes a flange part (64) covering the notch (80). Thus, by virtue of the screen stay being an integral-molded element, the screen stay is improved in its appearance benefitting from the effect of die-cast metals or injection-molded hard resins. This also contributes to reducing the number of components of the screen stay and the number of assembly steps.

Further according to the first aspect, when the screen stay (60) is mounted on the steering handle (2), the flange part (64) forms a surface continuous to the handle cover (3) and exposed at an upper part of the saddled vehicle (1). Thus, provision of the flange part which is flush with the surface of the handle cover improves the appearance of the lower end of the screen stay when the screen stay is mounted on the steering handle.

Further according to the first aspect, the handle cover (3) is formed of a front-side cover (53) on a front side and a rear-side cover (54) on a rear side. The notch (80) is formed at the front-side cover (53). The flange part (64) extends rearward to be brought into contact with the rear-side cover (54). The flange part extending rearward relative to the screen stay particularly improves the appearance of the part which is easily visible to the driver holding the steering handle.

According to the second aspect, the screen stay (60) is mounted from the front side on the steering handle (2). This facilitates work of mounting the screen stay.

According to the third aspect, the mount part (65) of the screen stay (60) is a plate-like member provided with through holes (65a, 65b). Thus, the mount part is formed of a plate-like member in which the through holes are oriented in the front-rear direction. That is, the entire screen stay can be formed using a mold assembly removed in the front-rear direction, and mounted on the steering handle from the front side.

According to the fourth aspect, the through holes (65a, 65b) are provided by two in number and vertically aligned with each other. To the steering handle (2), a mount stay (73) including bolts (72) to pass through the through holes (65a, 65b) is fixed. Thus, the screen stay is easily fixed by inserting the bolts fixed to the mount stay into the through holes of the mount part, and screwing nuts. By virtue of the through holes being aligned in the vertical direction by two pieces, an increase in the vehicle width dimension of the mount part is prevented while coupling strength is improved.

The fifth aspect further includes a top cover (46) covering an upper surface of the front-side cover (53). The upper surface of the front-side cover (53) is inclined rear-upward. The top cover (46) is provided with a bulging part (46a) covering an upper part of the notch (80) in front of the flange part (64). Thus, providing a notch at the upper surface of the inclined front-side cover, a fastening member can be fixed from the front side of the screen stay using the notch. Covering the notch provided in front of the screen stay with the bulging part of the top cover improves also the appearance as seen in a front view. Providing a top cover without a notch for allowing the screen stay to pass through easily provides a vehicle without the windscreen.

According to the sixth aspect, the saddled vehicle (1) is a scooter-type motorcycle including a step floor (38) for a driver to rest his/her feet. Thus, the screen stay suitable to a handle cover applied to a scooter-type motorcycle is provided.

### BRIEF DESCRIPTION OF DRAWINGS

FIG. 1 is a left side view of a motorcycle according to one embodiment of the present invention.
FIG. 2 is a partial enlarged front view of the motorcycle.
FIG. 3 is a cross-sectional view taken along line III-III in FIG. 2 (a cross section taken along the longitudinal center).
FIG. 4 is a partial enlarged front view of the motorcycle without a windscreen.
FIG. 5 is a perspective view of a handle cover as seen from a right, rear upper point.
FIG. 6 is a perspective view of right and left screen stays as seen from a right, rear upper point.
FIG. 7 is a left side view of the left one of the screen stays.
FIG. 8 is a partial enlarged front view corresponding to the handle cover in FIG. 4 without a top cover.
FIG. 9 is a perspective view of the handle cover in FIG. 8 as seen from a left, front upper point.
FIG. 10 is a perspective view showing a coupling structure of the screen stays and a steering handle.
FIG. 11 is a perspective view of the handle cover in FIG. 8 without the top cover as seen from a left, rear upper point.

### DETAILED DESCRIPTION

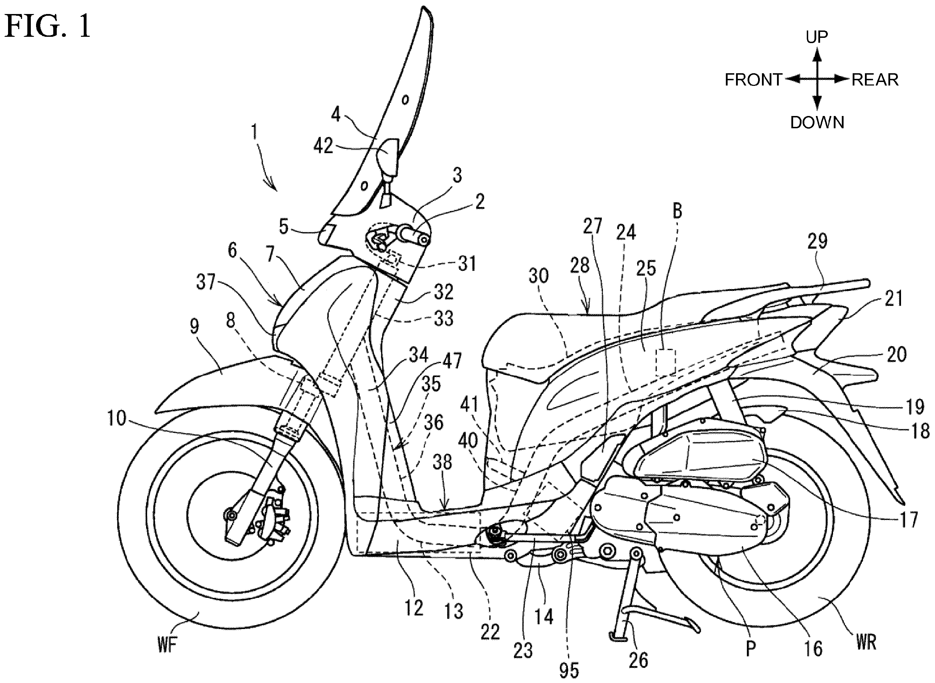

In the following, with reference to the drawings, a detailed description will be given of a preferred embodiment of the present invention. FIG. 1 is a left side view of a motorcycle 1 according to one embodiment of the present invention. The motorcycle 1 is a scooter-type saddled vehicle which includes, between a seat 28 and a steering handle 2, a step floor 38 for the driver to rest his/her feet thereon. The motorcycle 1 includes a vehicle body frame 35, a front wheel WF supported on the vehicle body frame 35 via front forks 10, a unit swing-type power unit P supported on the vehicle body frame 35, and a rear wheel WR supported at the rear end of the power unit P.

The vehicle body frame 35 includes a head pipe 33, a down frame 36 extending rear-downward from the head pipe 33, a right and left pair of lower frames 13 extending rightward and leftward respectively from the bottom of the down frame 36 and then extending linearly rearward, and a right and left pair of rear frames 24 extending rear-upward integrally from the rear end of the right and left lower frames 13.

The head pipe 33 rotatably supports a steering stem 31. To the lower end of the steering stem 31, a bottom bridge 8 supporting the right and left pair of front forks 10 is fixed. The steering handle 2 is mounted on an upper part of the steering stem 31. The front wheel WF is supported at the lower end of the front forks 10 via an axle. Thus, by the steering handle 2 steered rightward and leftward, the front wheel WF is steered rightward and leftward.

The right and left pair of lower frames 13 extends substantially horizontally rearward from the lower end of the down frame 36 as seen in a side view of the vehicle. The lower frames 13 support the step floor 38 and swingably pivotally support the power unit P via a link mechanism 14. On rising parts 40 of the right and left pair of rear frames 24, a curved cross frame 41 projecting frontward is mounted. Above the link mechanism 14, on the left one of the lower frames 13, a side stand 23 is swingably mounted. A center stand 26 is provided beneath the power unit P.

The power unit P is of the unit-swing type, in which a continuously variable transmission 16 is integrated with the rear part of the engine. The continuously variable transmission 16 is disposed on the left side of the rear wheel WR. Above the continuously variable transmission 16, an air cleaner 17 connected to the air intake passage of the engine is disposed. On the right side of the rear wheel WR, a muffler exhausting the exhaust gas in the engine is disposed. The rear end of the power unit P is suspended from the rear frames 24 by a rear shock absorber 19. A radiator 95 dissipating heat from coolant for the engine is disposed above the link mechanism 14 and on the right side in the vehicle body.

A vehicle body cover 6 as an exterior component of the motorcycle 1 includes a front cover 7 covering the front side of the head pipe 33, a right and left pair of leg shields 34 coupled to the both sides of the front cover 7, an upper floor panel 32 interposed between the right and left leg shields 34 on the rear side of the head pipe 33, an under floor panel 47 continuous to the lower end of the upper floor panel 32, and a handle cover 3 covering the central part of the steering handle 2. On the upper part of the handle cover 3 supporting a position lamp 5, a windscreen 4 extending rear-upward as seen in a side view is disposed. On the outer sides in the vehicle width direction of the handle cover 3, a right and left pair of rear view mirrors 42 is disposed. Below the front cover 7, a headlamp 37 is disposed.

The vehicle body cover 6 further includes a right and left pair of lower covers 12 covering the right and left lower frames 13 laterally and from below, a right and left pair of rear side covers 25 covering the right and left rear frames 24 on the outer sides in the vehicle width direction, a front fender 9 covering the upper side of the front wheel WF, a rear fender 20 covering the rear upper side of the rear wheel WR, and an inner rear fender 18 covering the front upper side of the rear wheel WR. A tail lamp 21 is mounted on the upper rear end of the rear fender 20. Between the seat 28 and the tail lamp 21, a grab rail 29 is disposed.

Below the seat 28 which is opened or closed, a storage compartment 30 configured to store any luggage such as a helmet or a tool is disposed. The storage compartment 30 is disposed between the right and left rear frames 24, and has its front lower end fixed to the upper part of the cross frame 41. The seat 28 is swingably attached at the front end of the storage compartment 30, to function as an openable lid for the storage compartment 30. A battery B is disposed at the substantial central part of the storage compartment 30. Foldable pillion steps 27 for the passenger are respectively fixed to the right and left rear frames 24. A fuel tank 22 is disposed below the step floor 38.

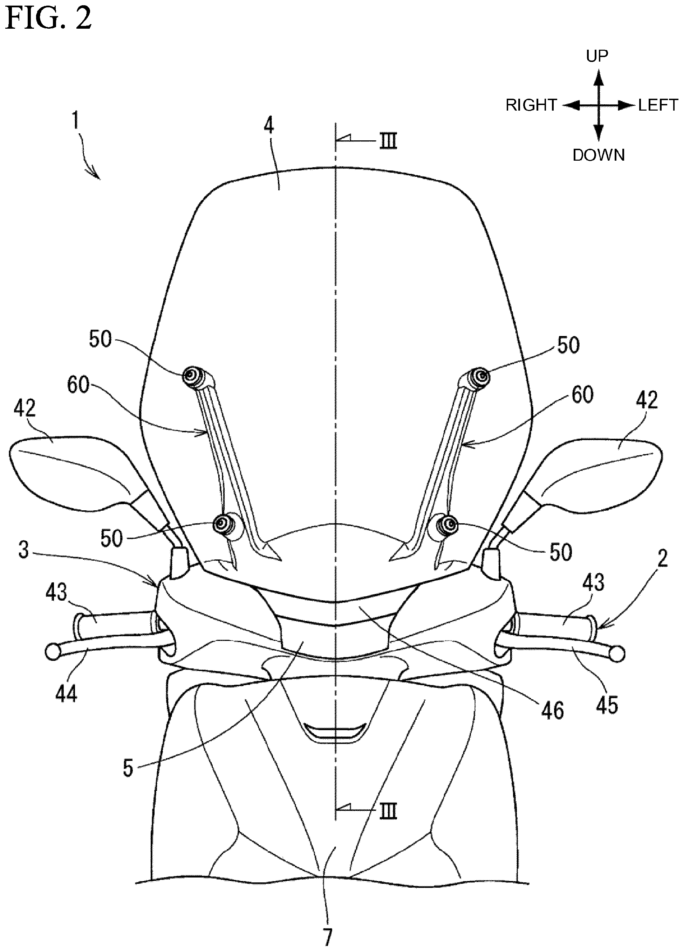

FIG. 2 is a partial enlarged front view of the motorcycle 1. On the right and left ends of the steering handle 2, grips 43 for the driver to hold are mounted. On the front side of the right and left grips 43, a front brake lever 44 and a rear brake lever 45 are respectively disposed. At the center in the vehicle width direction of the handle cover 3, a position lamp 5 is disposed. The position lamp 5 is provided with a top cover 46 at its top edge.

The windscreen 4 which has a rounded substantial hexagonal shape as seen in a front view is formed of, for example, colored or non-colored transparent flat plate-like hard resin. A right and left pair of screen stays 60 extending upward from the handle cover 3 is disposed in an inclined manner so as to increase the distance between the pair upward. To the front side of the screen stays 60, the windscreen 4 is fixed with fastening members 50 such as bolts.

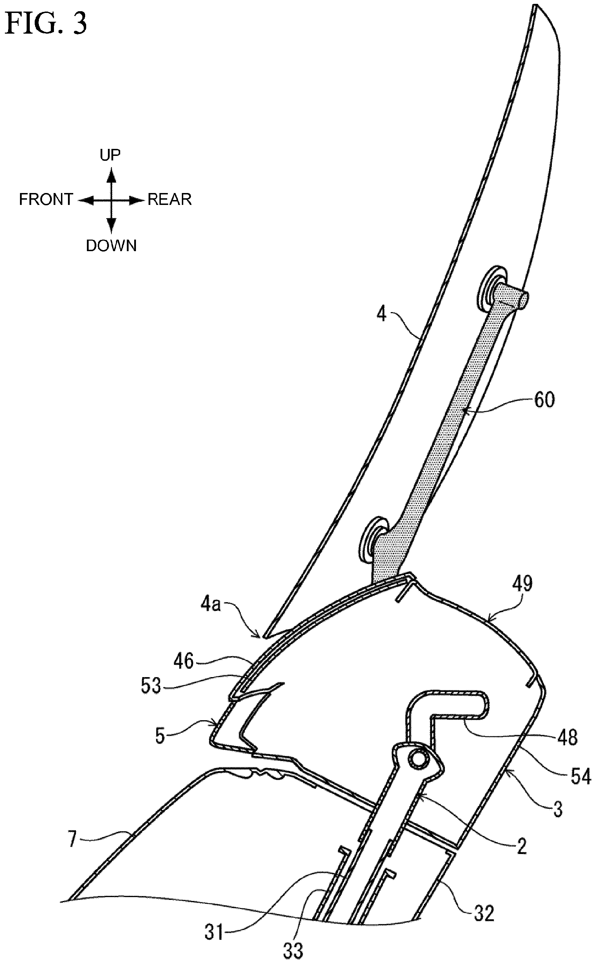

FIG. 3 is a cross-sectional view taken along line III-III in FIG. 2 (a cross section taken along the longitudinal center). The handle cover 3 includes a front-side cover 53 and a rear-side cover 54 clamping the steering handle 2 from the front and rear sides. The central part in the vehicle width direction of the front-side cover 53 is covered with the top cover 46. The position lamp 5 is set in an opening provided at the front-side cover 53. An instrument panel 49 is interposed between the front-side cover 53 and the rear-side cover 54 at an upper level in the vehicle body. To the upper end of the steering stem 31, the steering handle 2 including right and left pair of handlebars 48 equipped with the grips 43 is fixed.

The windscreen 4 is curved so as to protrude rearward, and inclined rearward. Between a lower end 4a of the windscreen 4 and the top cover 46, a clearance is formed in order to allow airflow caused by the vehicle driving to pass through. Allowing the airflow to pass through at the center in the vehicle width direction alleviates generation of negative pressure behind the windscreen 4.

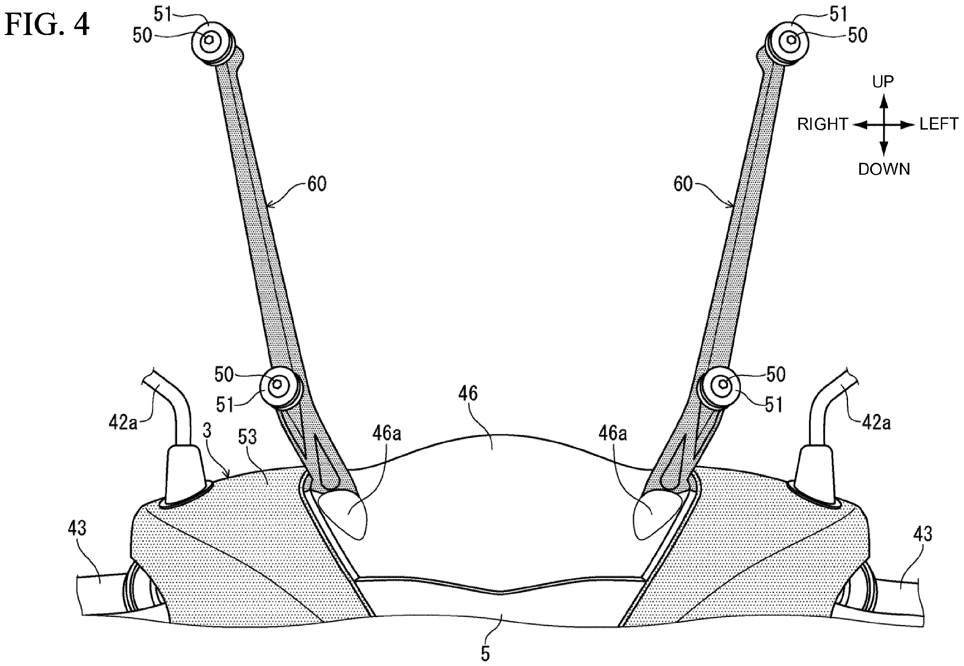

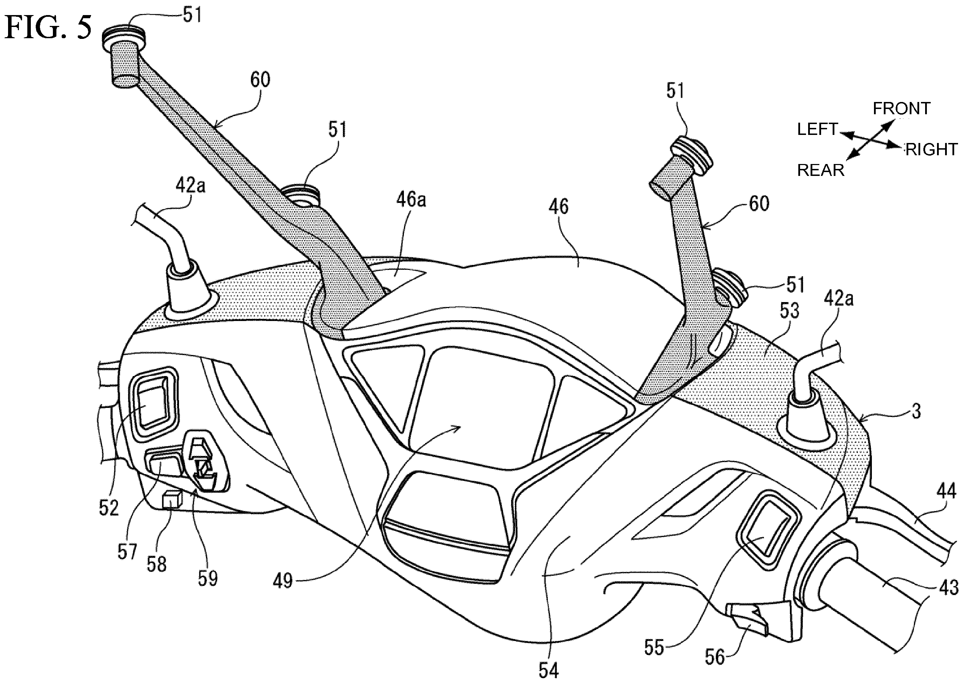

FIG. 4 is a partial enlarged front view of the motorcycle 1 without the windscreen 4. FIG. 5 is a perspective view of the handle cover 3 as seen from a right, rear upper point. In FIGS. 4 and 5, the front-side cover 53 is shaded lighter, and the screen stays 60 are shaded darker.

Stays 42a for the rear view mirrors 42 are fixed to the steering handle 2 via through holes provided at the front-side cover 53. The screen stays 60 are fixed to the steering handle 2 via notches provided at the front-side cover 53 and the top cover 46. The top cover 46 is provided with bulging parts 46a bulging upward so as to hide the lower end of the screen stays 60 as seen from the front side. The windscreen 4 is provided with four through holes, with which grommets 51 formed of rubber or the like are fitted. Then, from the front side, fastening members 50 are screwed thereon. Thus, the windscreen 4 is rubber mounted on the screen stays 60.

With reference to FIG. 5, on the right side of the rear-side cover 54, an idle stop switch 55 and an ignition switch 56 are disposed. On the left side of the rear-side cover 54, a dimmer switch 52 for the headlamp 37, a D-pad 59 functioning also as a turn signal switch and a confirm button 57, and a horn switch 58 are disposed. The rear sides at the lower ends of the screen stays 60 extend so as to be in contact with the rear-side cover 54 and the instrument panel 49, and each form a surface continuous to the top cover 46.

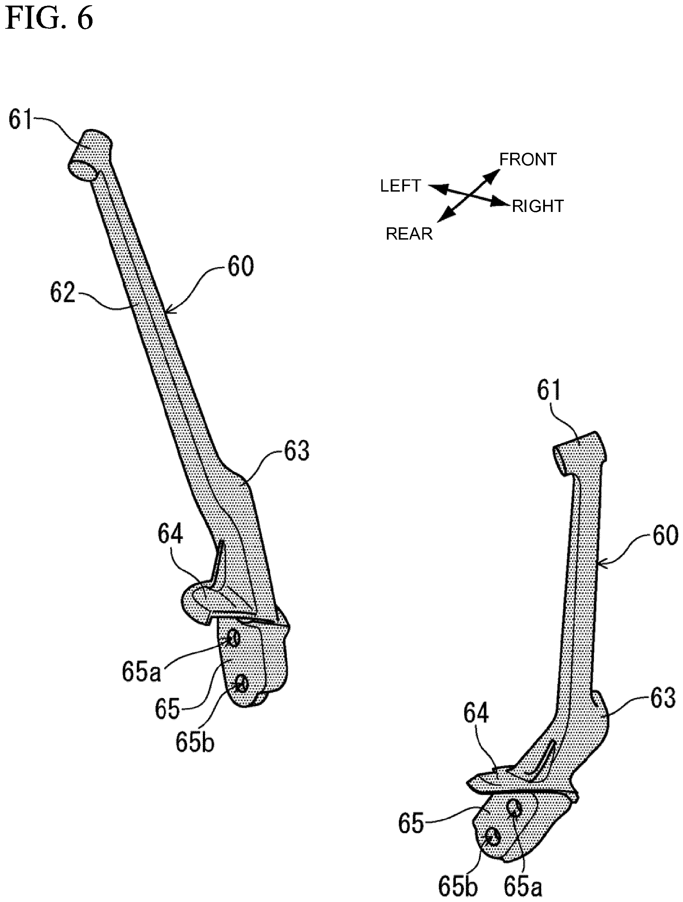

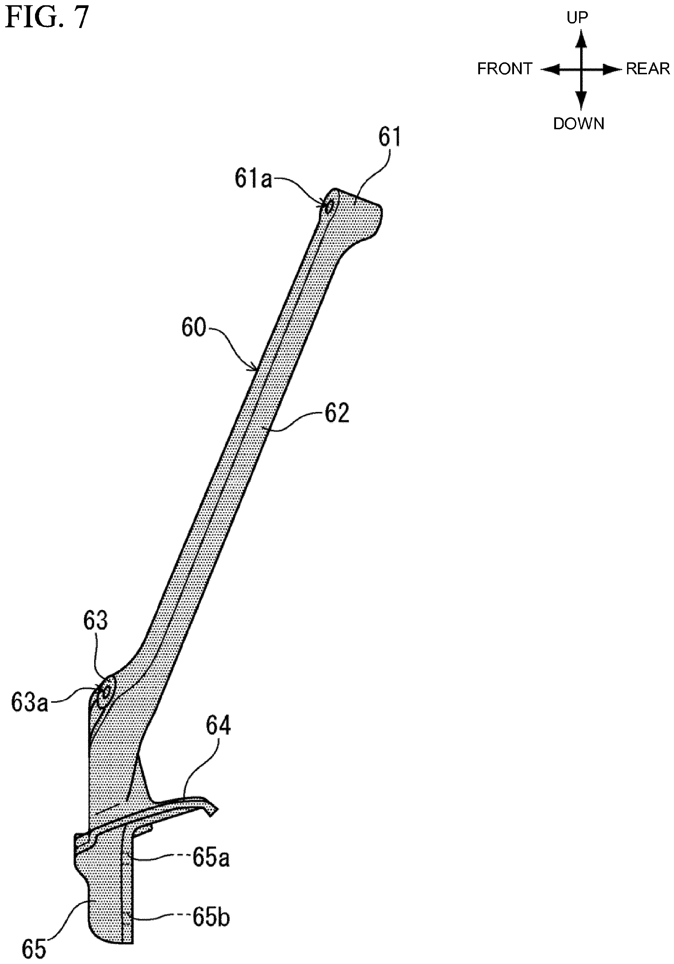

FIG. 6 is a perspective view of the right and left screen stays 60 as seen from a right, rear upper point. FIG. 7 is a left side view of the left one of the screen stays 60. The screen stays 60 have vertical symmetry. An elongated body part 62 of the screen stay 60 includes an upper support part 61 provided with a female screw hole 61a screwed with the fastening member 50, and a lower support part 63 provided with a female screw hole 63a. The lower part of the body part 62 is provided with a flange part 64 extending rearward and a mount part 65 for fixing the screen stay 60 to the steering handle 2.

As shown in FIG. 5, when the screen stays 60 are mounted at predetermined positions, each thin plate-like flange part 64 becomes flush with the surface of the top cover 46 and exposed at an upper part of the vehicle body. This particularly improves the appearance of the part which is easily visible to the driver holding the steering handle.

The thin plate-like mount part 65 is provided with two through holes 65a, 65b aligned in the vertical direction. Each of the screen stays 60 is fixed to the steering handle 2 with bolts passing through the through holes 65a, 65b. As shown in FIG. 7, when the screen stay 60 is mounted on the steering handle 2, the plate-like part provided with the through holes 65a, 65b is vertically oriented; the flange part 64 is inclined rear-upward; and the body part 62 is inclined rearward.

With such a shape, the screen stays 60 can be formed using a mold assembly removed in the front-rear direction, and mounted on the steering handle 2 from the front side. The through holes 65a, 65b at the mount part 65 are formed in the molding, while the female screw hole 61a at the upper support part 61 and the female screw hole 63a at the lower support part 63 are formed by machine work (removal work) after the molding.

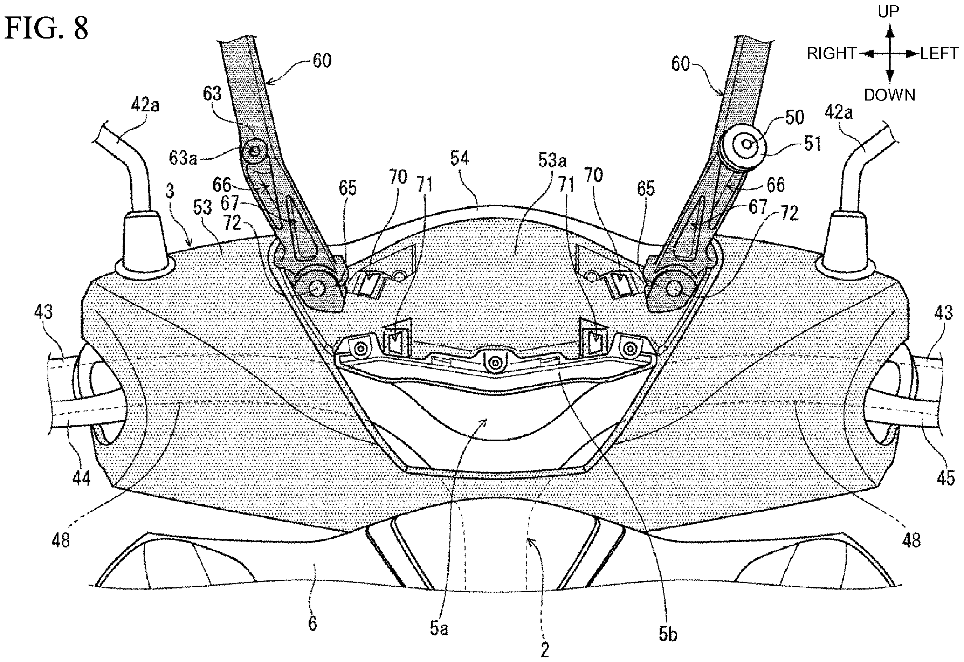

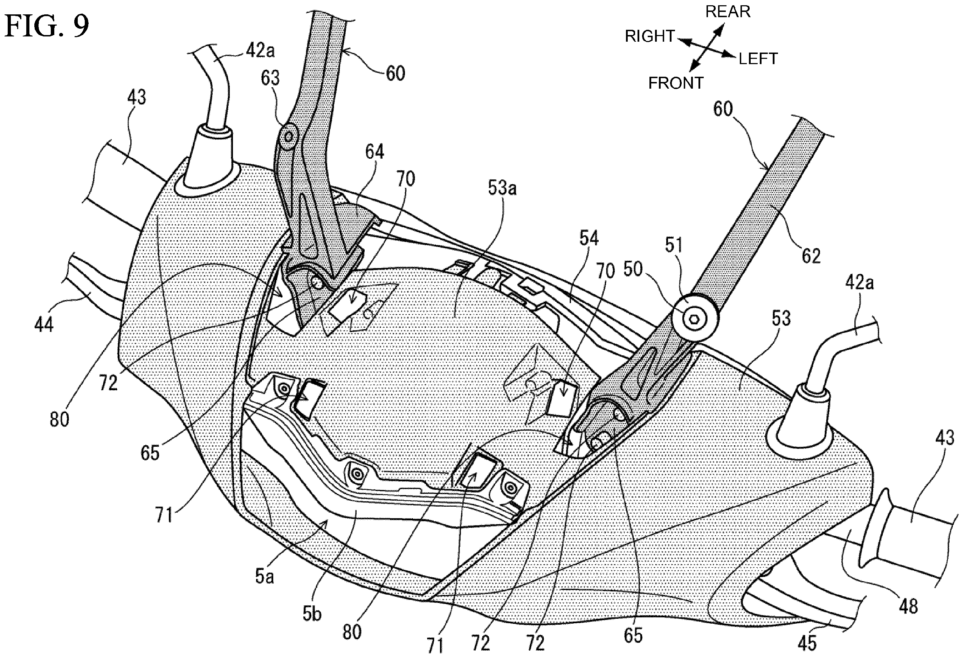

FIG. 8 is a partial enlarged front view corresponding to the handle cover 3 in FIG. 4 without the top cover 46. FIG. 9 is a perspective view of the handle cover 3 in FIG. 8 as seen from a left, front upper point. In FIGS. 8 and 9, the position lamp 5 is also not shown while a fixing member 5b for the position lamp 5 is left. Beneath the lower support parts 63 of the screen stays 60, reduced-thickness parts 66, 67 are provided for an improvement also in terms of design.

At the center in the vehicle width direction of the front-side cover 53, an opening 5a for the position lamp 5 to be set in is formed. The position lamp 5 is mounted on the front-side cover 53 via a fixing member 5b fixed to the upper edge of the opening 5a. At an upper part of the front-side cover 53, an upper surface part 53a covered with the top cover 46 is provided. At the upper surface part 53a inclined rear-upward, right and left pairs of rear engagement holes 70 and front engagement holes 71 for fixing the top cover 46 are formed.

On the outer sides in the vehicle width direction of the upper surface part 53a, notches 80 for allowing the mount parts 65 of the screen stays 60 to pass through are formed. The screen stays 60 are mounted by: inserting the mount parts 65 from above the notches 80; inserting mount bolts 72 fixed to the steering handle 2 on the through holes 65a, 65b of the mount parts 65; and screwing nuts from the front side of the mount bolts 72. This allows the screen stays 60 to be attached or removed without the necessity of removing not only the rear-side cover 54 but also the front-side cover 53.

While the upper part of each mount part 65 is disposed so as to project upward from the upper surface part 53a, it is covered with the corresponding bulging part 46a of the top cover 46. This maintains the excellent appearance. That is, the screen stays 60 are stably fixed with improved flexibility in design of the mount parts 65, with improved appearance.

The bulging parts 46a formed at the top cover 46 cover from the notches 80, which has been left open after the screen stays 60 are mounted, to ribs standing on the front side at upper parts of the mount parts 65, thereby improving the appearance and reducing the air resistance. Note that, providing a top cover without the notches 80 easily provides a vehicle without the windscreen 4. This top cover can dispense with the bulging parts and, therefore, a further smooth surface is provided.

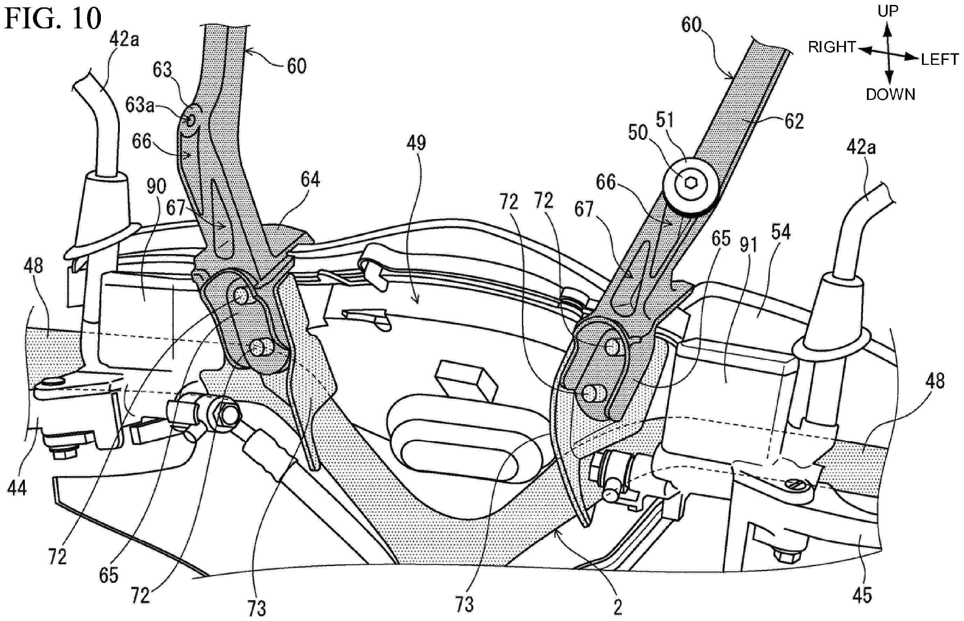

FIG. 10 is a perspective view showing the coupling structure of the screen stays 60 and the steering handle 2. In FIG. 10, the steering handle 2 is shaded lighter, and the screen stays 60 is shaded darker. At the base of the front brake lever 44 provided on the right handlebar 48, a reservoir tank 90 configured to store brake fluid for the front brake is disposed. At the base of the rear brake lever 45 provided on the left handlebar 48, a reservoir tank 91 configured to store brake fluid for the rear brake is disposed.

To the handlebars 48 at the positions inner than the right and left reservoir tanks 90, 91, plate-like mount stays 73 for mounting the screen stays 60 are fixed. To the mount stays 73, mount bolts 72 oriented frontward are welded. Thus, by allowing the mount bolts 72 fixed to the mount stays 73 to pass through the through holes 65a, 65b of the mount parts 65 to be screwed with nuts which are not shown, the screen stays 60 are easily fixed from the front side. By virtue of the mount bolts 72 and corresponding through holes 65a, 65b are vertically aligned two pieces each, an increase in the vehicle width dimension of the mount parts is prevented while coupling strength is improved.

In the present embodiment, the screen stays 60 are fastened and tightened by the nuts screwed from the front side on the mount bolts 72 provided on the handle side. Here, the screen stays 60 may be fastened and tightened by bolts screwed from the front side on nuts fixed to the handle side.

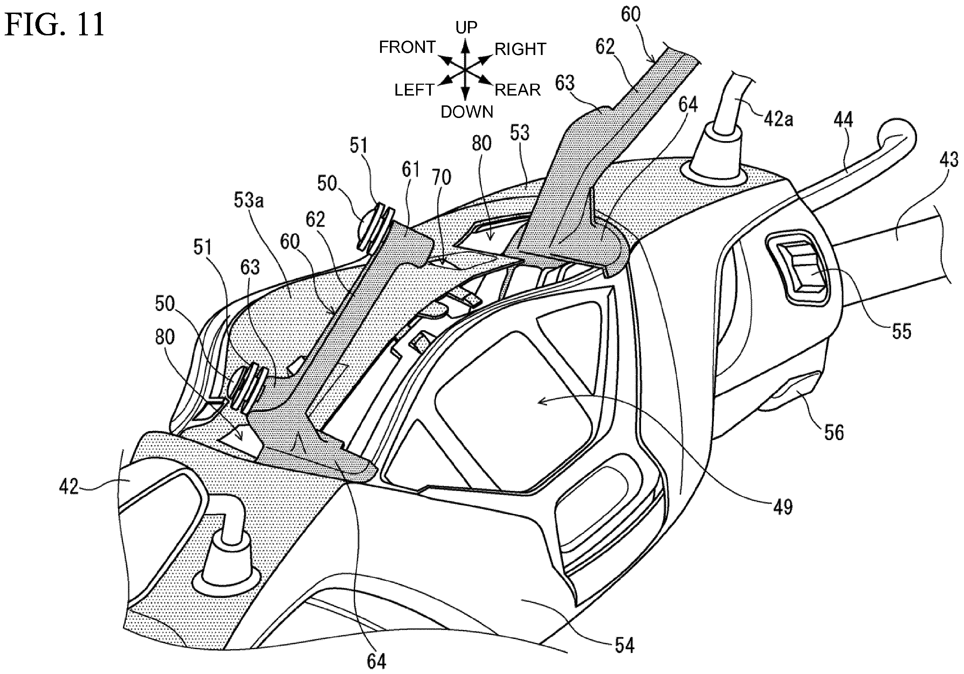

FIG. 11 is a perspective view of the handle cover 3 in FIG. 8 without the top cover 46 as seen from a left, rear upper point. In FIG. 11, similarly to FIG. 8, the steering handle 2 is shaded lighter, and the screen stays 60 are shaded darker.

As described above, the flange part 64 provided at the screen stays 60 extends rearward to be in contact with the rear-side cover 54 and the instrument panel 49, to be integrated with the top cover 46. When the screen stays 60 are formed of metal, the screen stays 60 present texture different from that of the top cover 46 formed of hard resin or the like. In particular, this improves the appearance of the part which is easily visible to the driver holding the steering handle. Here, a top cover dispensing with the screen stays 60 presents improved appearance with its smooth surface free of the boundary with the screen stays.

The mode of the saddled vehicle, the shape of the windscreen, the shape or material of the screen stays, the shape or material of the handle cover, the shape of the front-side cover and the rear-side cover, the type of the fastening members and the like are not limited to those in the embodiment, and various changes may be made, within the scope of the appended claims . The screen stay mount structure of the present invention is applicable not only to a motorcycle, and is applicable to a saddle-ridden three-wheel or four-wheel vehicle.

### Reference Signs List

1: motorcycle (saddled vehicle)
2: steering handle
3: handle cover
4: windscreen
38: step floor
43: grip
46: top cover
46a: bulging part
53: front-side cover
54: rear-side cover
60: screen stay
64: flange part
65: mount part
65a, 65b: through hole of mount part
72: bolt
73: mount stay
80: notch

## Claims

1. A saddled vehicle (1) comprising:
a steering handle (2) including a grip (43) at each of its right and left ends;
a handle cover (3) covering a center in a vehicle width direction of the steering handle (2);
a windscreen (4) disposed above the handle cover (3); and
a screen stay (60) supporting the windscreen (4) and removably mounted on the steering handle (2), wherein
the screen stay (60) is an integral-molded element,
the handle cover (3) includes a notch (80) for allowing a mount part (65) provided at a bottom end of the screen stay (60) to pass through, and
the screen stay (60) includes a flange part (64) covering the notch (80),
**characterized in that**
when the screen stay (60) is mounted on the steering handle (2), the flange part (64) forms a surface continuous to the handle cover (3) and exposed at an upper part of the saddled vehicle (1), and
the handle cover (3) is formed of a front-side cover (53) on a front side and a rear-side cover (54) on a rear side,
the notch (80) is formed at the front-side cover (53), and
the flange part (64) extends rearward to be brought into contact with the rear-side cover (54).

2. The saddled vehicle according to claim 1, wherein the screen stay (60) is mounted from the front side on the steering handle (2).

3. The saddled vehicle according to any one of claims 1 to 2, wherein the mount part (65) of the screen stay (60) is a plate-like member provided with through holes (65a, 65b).

4. The saddled vehicle according to claim 3, wherein
the through holes (65a, 65b) are provided by two in number and vertically aligned with each other, and
to the steering handle (2), a mount stay (73) including bolts (72) to pass through the through holes (65a, 65b) is fixed.

5. The saddled vehicle according to any one of claims 1 to 4, further comprising
a top cover (46) covering an upper surface of the front-side cover (53), wherein
the upper surface of the front-side cover (53) is inclined rear-upward, and
the top cover (46) is provided with a bulging part (46a) covering an upper part of the notch (80) in front of the flange part (64).

6. The saddled vehicle according to any one of claims 1 to 5, wherein the saddled vehicle (1) is a scooter-type motorcycle including a step floor (38) for a driver to rest his/her feet.

## Patentansprüche

1. Fahrzeug vom Satteltyp (1) mit
einer Lenkstange (2), die an ihrem rechten und linken Ende jeweils einen Griff (43) aufweist
eine Lenkstangenabdeckung (3), die in Fahrzeugbreitenrichtung die Mitte der Lenkstange (2) abdeckt;
eine Windschutzscheibe (4), die oberhalb der Lenkstangenabdeckung (3) angeordnet ist; und
eine Scheibenstrebe (60), die die Windschutzscheibe (4) trägt und abnehmbar an der Lenkstange (2) angebracht ist, wobei
die Scheibenstrebe (60) ein einstückig gegossenes Element ist,
die Lenkstangenabdeckung (3) eine Aussparung (80) aufweist, durch die ein Befestigungsteil (65), das an einem unteren Ende der Scheibenstrebe (60) vorgesehen ist, durchreicht, und
die Scheibenstrebe (60) ein Flanschteil (64) aufweist, das die Kerbe (80) abdeckt,
**dadurch gekennzeichnet, dass**
wenn die Scheibenstrebe (60) an der Lenkstange (2) montiert ist, das Flanschteil (64) eine mit der Lenkstangenabdeckung (3) durchgehende Fläche bildet und an einem oberen Teil des Fahrzeugs vom Satteltyp (1) freiliegt, und
die Lenkstangenabdeckung (3) an einer Vorderseite aus einer vorderseitigen Abdeckung (53) und an einer Rückseite aus einer rückseitigen Abdeckung (54) gebildet ist,
die Kerbe (80) an der vorderseitigen Abdeckung (53) ausgebildet ist, und
das Flanschteil (64) sich nach hinten erstreckt, um mit der rückseitigen Abdeckung (54) in Eingriff gebracht zu werden.

2. Fahrzeug vom Satteltyp nach Anspruch 1, wobei die Scheibenstrebe (60) von der Vorderseite aus an der Lenkstange (2) befestigt ist.

3. Fahrzeug vom Satteltyp nach einem der Ansprüche 1 bis 2, wobei der Befestigungsbereich (65) der Scheibenstrebe (60) ein mit Durchgangslöchern (65a, 65b) versehenes plattenförmiges Element darstellt.

4. Fahrzeug vom Satteltyp nach Anspruch 3, wobei
zwei Durchgangslöcher (65a, 65b) vorgesehen sind die vertikal zueinander ausgerichtet sind, und
an der Lenkstange (2) eine Befestigungsstrebe (73) durch Bolzen (72) die durch die Durchgangslöcher (65a, 65b) hindurchgeführt sind befestigt ist.

5. Fahrzeug vom Satteltyp nach einem der Ansprüche 1 bis 4, ferner aufweisend
eine obere Abdeckung (46), die eine obere Fläche der vorderseitigen Abdeckung (53) abdeckt, wobei
die Oberseite der vorderseitigen Abdeckung (53) nach hinten-oben geneigt ist, und
die obere Abdeckung (46) mit einem gewölbten Abschnitt (46a) versehen ist, der vor dem Flanschteil (64) einen oberen Teil der Kerbe (80) abdeckt.

6. Fahrzeug vom Satteltyp nach einem der Ansprüche 1 bis 5, wobei das Fahrzeug vom Satteltyp (1) ein motorrollerartiges Motorrad darstellt, das einen Trittboden (38) aufweist, auf dem ein Fahrer seine Füße abstützen kann.

## Revendications

1. Véhicule à selle (1) comprenant :
une poignée de direction (2) comprenant une poignée (43) à chacune de ses extrémités droite et gauche ;
un capot de poignée (3) recouvrant un centre dans un sens de largeur du véhicule de la poignée de direction (2) ;
un pare-brise (4) disposé au-dessus du capot de poignée (3) ; et
un support d'écran (60) soutenant le pare-brise (4) et monté de façon amovible sur la poignée de direction (2), dans lequel le support d'écran (60) est un élément moulé d'une seule pièce,
le capot de poignée (3) comprend une encoche (80) pour permettre à une partie de montage (65) prévue à une extrémité inférieure du support d'écran (60) de passer à travers, et
le support d'écran (60) comprend une partie formant bride (64) recouvrant l'encoche (80),
**caractérisé en ce que** lorsque le support d'écran (60) est monté sur la poignée de direction (2), la partie formant bride (64) forme une surface continue au capot de poignée (3) et exposée à une partie supérieure du véhicule à selle (1), et
le capot de poignée (3) est formé d'un capot côté avant (53) sur un côté avant et d'un capot côté arrière (54) sur un côté arrière,
l'encoche (80) est formée sur le capot côté avant (53), et
la partie formant bride (64) s'étend vers l'arrière pour être mise en contact avec le capot côté arrière (54).

2. Véhicule à selle selon la revendication 1, dans lequel le support d'écran (60) est monté depuis le côté avant de la poignée de direction (2).

3. Véhicule à selle selon l'une quelconque des revendications 1 à 2, dans lequel la partie de montage (65) du support d'écran (60) est un élément en forme de plaque doté de trous traversants (65a, 65b).

4. Véhicule à selle selon la revendication 3, dans lequel les trous traversants (65a, 65b) sont prévus au nombre de deux et alignés verticalement les uns par rapport aux autres, et un support de montage (73) comprenant des boulons (72) à passer à travers les trous traversants (65a, 65b) est fixé à la poignée de direction (2).

5. Véhicule à selle selon l'une quelconque des revendications 1 à 4, comprenant en outre un capot supérieur (46) recouvrant une surface supérieure du capot côté avant (53), dans lequel la surface supérieure du capot côté avant (53) est inclinée vers le haut en arrière, et le capot supérieur (46) est doté d'une partie saillante (46a) recouvrant une partie supérieure de l'encoche (80) en face de la partie formant bride (64).

6. Véhicule à selle selon l'une quelconque des revendications 1 à 5, dans lequel le véhicule à selle (1) est une motocyclette de type scooter comprenant un marchepied (38) pour qu'un conducteur pose ses pieds.
